# FASCICULE DE BREVET EUROPEEN

(11) **EP 2 425 212 B1**
(45) Date de publication et mention de la délivrance du brevet: **10.10.2018**
(21) Numéro de dépôt: 10727058.9
(22) Date de dépôt: 28.04.2010
(51) Int. Cl.: G01F 23/26, B22D 11/18, B22D 2/00, B22D 11/20

(54) **CAPTEUR ET PROCÉDÉ DE MESURE DE NIVEAU DE LA SURFACE D'UN MÉTAL EN PHASE LIQUIDE**
SENSOR UND VERFAHREN ZUR MESSUNG DES OBERFLÄCHENNIVEAUS EINES FLÜSSIGPHASENMETALLS
SENSOR AND METHOD FOR MEASURING THE SURFACE LEVEL OF A LIQUID PHASE METAL

(30) Priorité: 29.04.2009 FR 0952849
(43) Date de publication de la demande: 07.03.2012
(73) Titulaire: Avemis, 69590 Saint-Symphorien-Sur-Coise (FR)
(72) Inventeur: DUSSUD, Michel, F-69850 Saint Martin En Haut (FR)
(74) Mandataire: Brohez, Véronique
(86) Numéro de dépôt international: PCT/FR2010/050810
(87) Numéro de publication internationale: WO 2010/125310

(56) Documents cités:
- GB-A- 2 004 373
- US-A- 4 647 854
- US-A1- 2002 105 342

## Description

La présente invention concerne un capteur de mesure de niveau de métal dans une lingotière à coulée continue.

Le procédé sidérurgique de coulée continue prévoit de couler du métal en fusion à une température de l'ordre de 1500°C dans un moule sans fond. La forme de la lingotière détermine la section du lingot qui est extrudé de manière continue.

Un paramètre critique de ce procédé est le niveau du métal en fusion dans la lingotière.

Le contrôle du niveau de métal en fusion peut être fait de façon conventionnelle par un capteur électromagnétique suspendu comme cela est montré, par exemple, par le document US- A- 4,647,854.

Ce type de capteur possède deux ou trois bobines séparées et indépendantes qui sont toutes parallèles à la surface de métal en fusion. Une première bobine a une fonction d'excitation ; la seconde et la troisième bobine ont une fonction de mesure et sont disposées de part et d'autre de la bobine d'excitation.

Le principe de fonctionnement de ce type de capteur consiste à faire circuler dans la bobine d'excitation un signal électrique alternatif généré par une électronique de commande, ce qui crée un champ magnétique.

Ce champ magnétique est plus ou moins perturbé en fonction du niveau de métal en fusion présent dans la lingotière.

Comme le champ magnétique varie en fonction du niveau de métal en fusion, la tension induite dans la bobine de mesure qui est adjacente au métal en fusion est représentative du niveau de métal dans la lingotière.

La tension induite qui parcourt la bobine de mesure adjacente au métal en fusion est comparée à la tension induite qui parcourt la bobine de mesure opposée et donc non perturbée, ce qui permet de déduire le niveau de métal liquide par différence de ces deux tensions induites.

En pratique, les capteurs électromagnétiques sont suspendus au-dessus du métal en fusion pour notamment éviter des effets de bord.

Le positionnement de ces capteurs au-dessus du métal en fusion gêne considérablement les interventions des opérateurs sur la coulée. Ceux-ci doivent en effet s'assurer en permanence de la « propreté » de la surface du métal en fusion et sont amenés à intervenir sur la surface du métal en fusion.

De plus, lors du changement du tube qui amène le métal en fusion dans la lingotière depuis une poche située en amont de la lingotière, le capteur doit être purement et simplement retiré de la lingotière.

Dans ce contexte technique, un but de l'invention est de proposer un capteur électromagnétique de mesure de métal en fusion pour une lingotière à coulée continue, comme décrit dans la revendication 1. Ce capteur peut être déporté de la surface de coulée et est peu sensible aux perturbations électromagnétiques et thermiques.

L'invention concerne un capteur de mesure de niveau de la surface d'un métal en phase liquide pour une installation de coulée continue comprenant une lingotière ayant une face supérieure dans laquelle débouche une ouverture dans laquelle est admis le métal liquide.

De plus, le capteur comprend :
- une bobine d'excitation à air orientée perpendiculairement à la face supérieure de la lingotière alimentée par un courant pour créer un champ magnétique dont les lignes de champ se propagent selon des lignes de champ supérieures qui s'éloignent de la lingotière et selon des lignes de champ inférieures qui recouvrent la face supérieure de la lingotière et la surface de métal en fusion, et
- une bobine de réception inférieure à air parallèle à la bobine d'excitation dans laquelle une tension induite est générée par l'action des lignes de champ inférieures, ces dernières étant susceptibles d'être modifiées par une variation du niveau de la surface de métal en fusion et
- une bobine de réception supérieure à air parallèle à la bobine d'excitation, et directement superposée à la bobine de réception inférieure et de géométrie et de caractéristiques identiques à celle-ci dans laquelle une tension induite est générée par l'action des lignes de champ supérieures, ces dernières étant substantiellement dépourvues de perturbations générées par la surface de métal en fusion, la bobine d'excitation, la bobine de réception inférieure et la bobine de réception supérieure étant orientées dans des plans perpendiculaires à la surface du métal liquide, le capteur étant conçu pour être disposé sur la face supérieure de la lingotière sur le bord de l'ouverture.

L'invention propose ainsi un capteur de mesure ayant une architecture originale qui permet de positionner ce capteur à demeure sur la lingotière en bordure du métal liquide. Bien que ne surplombant pas le métal liquide comme dans le cas conventionnel, le capteur selon l'invention assure une mesure de niveau du métal en fusion. Ceci est rendu possible grâce à la disposition selon laquelle les bobines d'excitation et de réception sont orientées dans des plans perpendiculaires à la surface du métal liquide. Ainsi le capteur selon l'invention utilise un champ magnétique qui est parallèle à la surface du métal liquide à mesurer.

De plus, le capteur selon l'invention est pourvu de bobines à air c'est à dire des bobines qui n'utilisent pas de noyau ferromagnétique. Cette disposition est importante pour la qualité de la mesure car les noyaux ferromagnétiques que l'on trouve dans les capteurs conventionnels sont sensibles aux variations de température et aux perturbations électromagnétiques ; ils présentent une hystérésis qui rend extrêmement difficile la modélisation de leur comportement. Le capteur selon l'invention présente donc une immunité vis à vis des perturbations et variations magnétique et thermique.

De préférence, la bobine de réception supérieure et la bobine de réception inférieure sont juxtaposées à la bobine d'excitation. Cette disposition permet d'obtenir un capteur compact, ce qui le rend moins perturbant.

Selon une disposition de l'invention, la bobine de réception inférieure et la bobine de réception supérieure sont disposées symétriquement par rapport au plan de symétrie de la bobine d'excitation.

En pratique, le capteur comprend un noyau amagnétique et isolant électrique sur lequel sont enroulés des fils électriques formant la bobine d'excitation et les deux bobines de réception.

Il est prévu que le noyau présente une gorge dans laquelle est enroulé en hélice un fil électrique formant la bobine d'excitation et deux gorges superposées ayant des axes parallèles entre eux et parallèles à l'axe de la gorge recevant la bobine d'excitation dans chacune desquelles est enroulé en hélice un fil électrique formant une bobine de réception.

Pour faciliter sa fabrication, il peut être prévu que le noyau comprenne deux sous parties superposées comprenant chacune une gorge pour une bobine de réception et une demi gorge pour une bobine d'excitation.

En pratique, chacune des gorges présente un profil sensiblement rectangulaire.

De plus, le capteur présente un carter destiné à assurer la protection des bobines et des moyens de connexion électrique aux bobines.

Afin de minimiser les pertes de champ magnétique par courant de Foucault, les parois supérieure et inférieure ainsi que la paroi frontale du carter sont constituées d'un matériau à forte résistivité électrique.

En variante afin d'orienter le champ magnétique, le capteur peut être équipé de plaques à faible résistivité électrique qui doublent ses parois inférieure et supérieure.

Il est prévu que le capteur intègre un circuit de refroidissement.

Selon une possibilité, le capteur de mesure peut être relié à une sonde de mesure de température positionnée à proximité de l'ouverture et destinée à mesurer la température de la plaque de cuivre de la lingotière. Cette mesure pourra être utilisée pour compenser les dérives de signal du capteur liées aux variations de température dans la paroi de la lingotière. La sonde de température peut être positionnée dans la paroi de la lingotière.

Selon un autre aspect, l'invention concerne un procédé de mesure de niveau d'une installation de coulée continue comprenant une lingotière ayant une face supérieure dans laquelle débouche une ouverture dans laquelle est admis le métal liquide caractérisé en ce que le procédé comprend les étapes consistant à :
- appliquer une tension à une bobine d'excitation à air orientée perpendiculairement à la face supérieure de la lingotière et disposée sur le bord de l'ouverture, pour créer un champ magnétique dont les lignes de champ se propagent selon des lignes de champ supérieures qui s'éloignent de la lingotière et selon des lignes de champ inférieures qui recouvrent la face supérieure de la lingotière et la surface de métal en fusion ;
- mesurer une tension induite générée par l'action des lignes de champ inférieures, ces dernières étant susceptibles d'être modifiées par une variation du niveau de la surface de métal en fusion, dans une bobine de réception inférieure à air parallèle à la bobine d'excitation ;
- mesurer une tension induite générée par l'action des lignes de champ supérieures, ces dernières étant substantiellement dépourvues de perturbations générées par la surface de métal en fusion, dans une bobine de réception supérieure à air parallèle à la bobine d'excitation, et superposée à la bobine de réception inférieure et de géométrie et de caractéristiques identiques à celle-ci, la bobine d'excitation, la bobine de réception inférieure et la bobine de réception supérieure étant orientées dans des plans perpendiculaires à la surface du métal liquide;
- comparer et effectuer un traitement numérique des tensions induites mesurées dans les bobines de réception inférieure et supérieure pour obtenir une valeur du niveau de métal en fusion dans la lingotière ;
- mesurer la température de la lingotière ;
- corriger par un traitement numérique la valeur du niveau de métal en fusion en fonction de la température de la lingotière.

L'invention prévoit d'effectuer une mesure de niveau depuis la lingotière ce qui peut avoir une influence sur la qualité de la mesure. Pour neutraliser l'influence des variations de température de la lingotière, l'invention prévoit de mesurer cette température et de corriger la mesure du niveau de métal de fusion en fonction de la température.

En variante, il peut être prévu une étape de correction par un traitement numérique de la valeur du niveau de métal en fusion en fonction de la largeur de la lingotière.

Pour sa bonne compréhension l'invention est décrite en référence au dessin ci annexé représentant à titre d'exemple non limitatif une forme de réalisation d'un capteur de mesure selon celle-ci.
Figure 1 représente schématiquement un capteur de mesure positionné sur une lingotière partiellement représentée;
Figure 2 montre en perspective un noyau appartenant au capteur de mesure,
Figues 3 et 4 montrent en coupe des canaux de refroidissement du capteur.

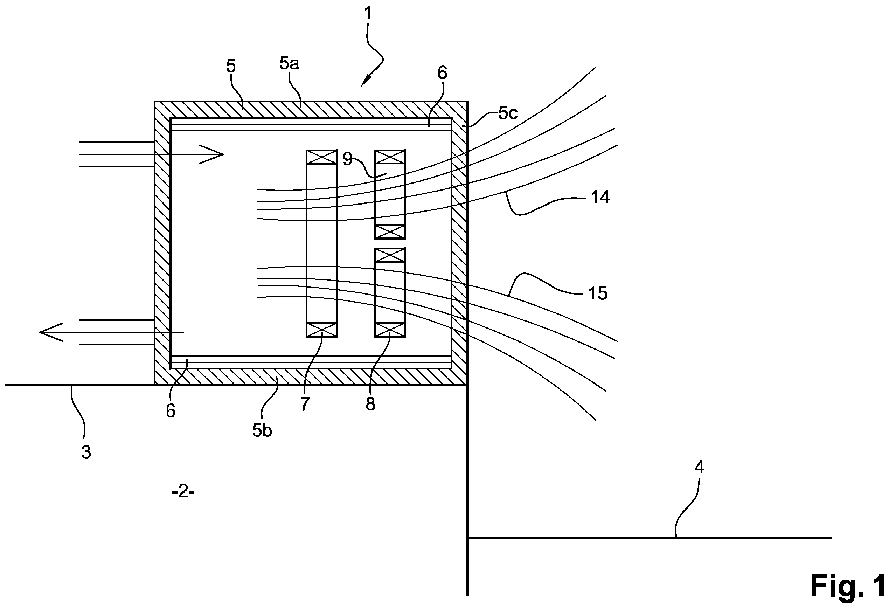

On peut voir sur le Figure 1 une lingotière partiellement représentée. De façon conventionnelle, la lingotière présente une face supérieure 3 et une ouverture 4 dont la section transversale détermine la section du lingot qui est issu de la lingotière 2.

Le métal liquide est introduit par un tube d'amenée (non représenté) dans l'ouverture 4 de la lingotière 2 et il convient d'en mesurer le niveau de manière continue afin de contrôler le débit de l'amenée de métal liquide.

Le capteur 1, comme on peut le voir sur la figure 1, est positionné à proximité de l'ouverture 4. En d'autres termes, le capteur 1 est placé sur le bord de l'ouverture 4 mais n'est pas en surplomb au-dessus de l'ouverture 4.

Le capteur comprend un carter 5 qui peut être en céramique ou métallique. Comme cela apparaît sur la figure 1, le dispositif peut comprendre un doublage de plaques 6, par exemple, de cuivre sur ses parois intérieures supérieure 5a et inférieure 5b qui assurent un blindage magnétique. Dans une autre forme de réalisation de l'invention, il est envisagé de réaliser directement les parois supérieure 5a et inférieure 5b du carter dans un matériau assurant un blindage magnétique.

En revanche, la face avant du carter (c'est à dire la face qui est positionnée de manière adjacente à l'ouverture 4 de la lingotière) peut être constituée de préférence d'un métal à très forte résistivité électrique.

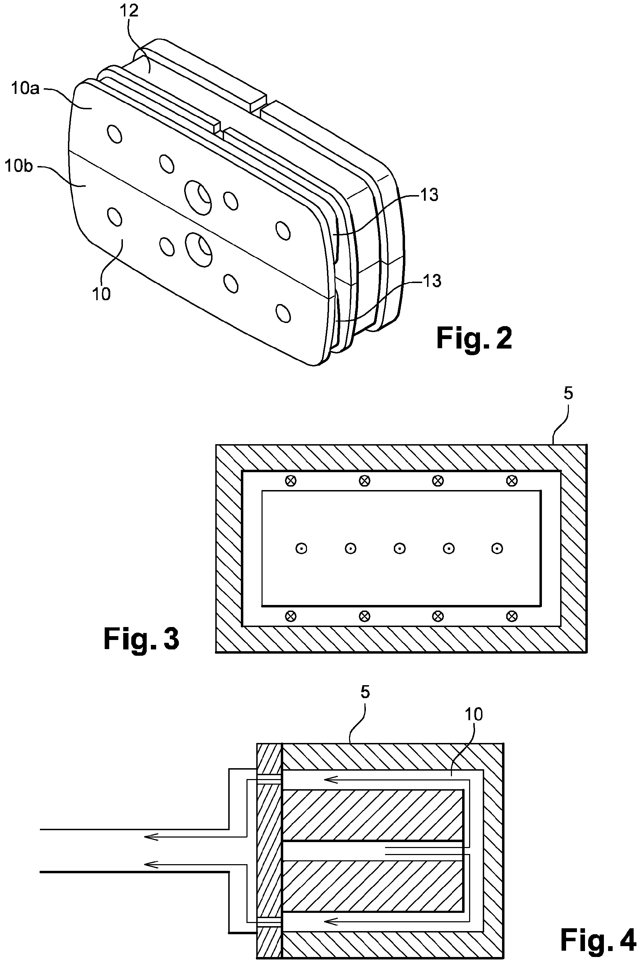

Le carter 5 peut être équipé de système de refroidissement à eau ou à air compte tenu de la température élevée qui entoure le capteur. Les figures 3 et 4 montrent un circuit de refroidissement comprenant plusieurs canaux 11 aménagés dans le carter 5 dans lesquels circule un fluide de refroidissement.

Le carter 5 peut être fixé sur la lingotière par des brides ou des vis. Contrairement aux capteurs conventionnels, le capteur selon l'invention est destiné à être positionné à demeure sur la lingotière.

A l'intérieur de son carter 5, le capteur 1 est pourvu de trois bobines qui sont orientées perpendiculairement à la face supérieure de la lingotière et qui sont donc également dans des plans perpendiculaires à la surface du métal liquide.

L'une des bobines est une bobine d'excitation 7 qui est donc perpendiculaire à la face supérieure de la lingotière. La bobine d'excitation 7 est constituée d'un enroulement hélicoïdal d'un fil conducteur et est parcourue par un courant électrique basse fréquence de l'ordre de 400 à 1200 Hz.

Les deux autres bobines sont des bobines de réception qui sont superposées selon une bobine de réception inférieure 8 et une bobine de réception supérieure 9.

La bobine de réception inférieure 8 et la bobine de réception supérieure 9 sont disposées symétriquement par rapport au plan de symétrie de la bobine d'excitation 7.

Pour des raisons de clarté de la figure 1, cette figure ne fait pas apparaître le noyau 10 sur lequel les bobines d'excitation et de réception sont enroulées. Le noyau 10 est représenté spécifiquement à la figure 2.

En pratique, le noyau 10 présente une gorge 12 dans laquelle est enroulé en hélice un fil électrique formant la bobine d'excitation 7 et deux gorges 13 superposées ayant des axes parallèles entre eux et parallèles à l'axe de la gorge 12 recevant la bobine d'excitation dans chacune desquelles est enroulé en hélice un fil électrique formant un bobine de réception.

On peut noter que chacune des gorges 12 et 13 présente un profil sensiblement rectangulaire.

Pour en faciliter la fabrication, le noyau peut comprendre deux sous parties 10a, 10b superposées comprenant chacune une gorge 13 pour une bobine de réception et une demi gorge 12 pour une bobine d'excitation.

Le noyau 10 est réalisé dans un matériau amagnétique et isolant électrique tel qu'une céramique ou une matière plastique résistante aux hautes températures.

En fonctionnement, la bobine d'excitation 7 qui est traversée par un courant crée un champ magnétique à l'intérieur et à l'extérieur de la bobine.

Des lignes de champ supérieures 14 se diffusent en s'éloignant de la lingotière et au travers de la bobine de réception supérieure 9; en revanche des lignes de champ inférieures 15 irriguent la lingotière et, en particulier, la partie de la lingotière 2 où se trouve la surface du métal en fusion, et diffusent au travers de la bobine de réception inférieure 8.

Comme cela est représenté à la figure 1 en ligne pointillée, les variations de niveau du métal en fusion perturbent les lignes de champ inférieures ce qui se traduit par une variation de tension induite dans la bobine de réception inférieure 8.

Les bobines de réception inférieure et supérieure 8 et 9 sont reliées à une unité de traitement électronique dans laquelle les tensions induites sont traitées, amplifiées et comparées.

Par comparaison avec la tension induite dans la bobine supérieure 9, il est alors possible de déterminer le niveau de métal liquide dans la lingotière. La disposition originale de la bobine d'excitation et des bobines de réception fait qu'il est possible de positionner le capteur sur la lingotière en bordure de l'ouverture de coulée.

Il peut également être envisagé de doter le capteur selon l'invention d'une sonde de température. Cette sonde de température est de préférence positionnée à proximité immédiate de l'ouverture 4 ou dans la paroi de lingotière

Cette sonde de température de type thermocouple ou thermistance est reliée à l'unité électronique de traitement pour intégrer la donnée concernant la température et éventuellement compenser les dérives de mesure liées aux variations de température dans la paroi de la lingotière.

Bien entendu, l'invention n'est pas limitée à la forme de réalisation décrite ci dessus à titre d'exemple non limitatif mais elle en embrasse au contraire toutes les formes de réalisation.

## Revendications

1. Capteur de mesure (1) de niveau de la surface d'un métal en phase liquide pour une installation de coulée continue comprenant une lingotière ayant une face supérieure (3) dans laquelle débouche une ouverture (4) dans laquelle est admis le métal liquide **caractérisé en ce que** le capteur comprend :
- une bobine d'excitation (7) à air alimentée par un courant pour créer un champ magnétique dont les lignes de champ se propagent selon des lignes de champ supérieures (14) qui s'éloignent de la lingotière et selon des lignes de champ inférieures (15) qui recouvrent la face supérieure de la lingotière et la surface de métal en fusion,
- une bobine de réception inférieure (8) à air parallèle à la bobine d'excitation dans laquelle une tension induite est générée par l'action des lignes de champ inférieures (15), ces dernières étant susceptibles d'être modifiées par une variation du niveau de la surface de métal en fusion et,
- une bobine de réception supérieure (9) à air parallèle à la bobine d'excitation (7), et directement superposée à la bobine de réception inférieure (8), de géométrie et de caractéristiques identiques à celle-ci dans laquelle une tension induite est générée par l'action des lignes de champ supérieures (14), ces dernières étant substantiellement dépourvues de perturbations générées par la surface de métal en fusion,
**caractérisé en ce que** la bobine
d'excitation (7), la bobine de réception inférieure (8) et la bobine de réception supérieure (9) sont orientées dans des plans perpendiculaires à la surface dont on mesure le niveau ;
le capteur (1) est conçu pour être disposé sur la face supérieure (3) de la lingotière sur le bord de l'ouverture (4).

2. Capteur de mesure de niveau selon la revendication 1, **caractérisé en ce que** la bobine de réception supérieure (9) et la bobine de réception inférieure (8) sont juxtaposées à la bobine d'excitation (7).

3. Capteur de mesure de niveau selon la revendication 1 ou la revendication 2, **caractérisé en ce que** la bobine de réception inférieure (8) et la bobine de réception supérieure (9) sont disposées symétriquement par rapport au plan de symétrie de la bobine d'excitation (7).

4. Capteur de mesure de niveau selon l'une des revendications 1 à 3, **caractérisé en ce qu'**il comprend un noyau (10) amagnétique et isolant électrique sur lequel sont enroulés des fils électriques formant la bobine d'excitation (7) et les deux bobines de réception (8,9).

5. Capteur de mesure selon la revendication 4, **caractérisé en ce que** le noyau (10) présente une gorge (12) dans laquelle est enroulé en hélice un fil électrique formant la bobine d'excitation (7) et deux gorges (13) superposées ayant des axes parallèles entre eux et parallèles à l'axe de la gorge recevant la bobine d'excitation (7) dans chacune desquelles est enroulé en hélice un fil électrique formant une bobine de réception (8,9).

6. Capteur de mesure selon l'une des revendications 4 ou 5, **caractérisé en ce que** le noyau (10) comprend deux sous parties superposées (10a, 10b) comprenant chacune une gorge (13) pour une bobine de réception et une demi-gorge (12) pour une bobine d'excitation.

7. Capteur de mesure selon l'une des revendications 5 ou 6, **caractérisé en ce que** chacune des gorges (12,13) présente un profil sensiblement rectangulaire.

8. Capteur de mesure selon l'une des revendications 1 à 7, **caractérisé en ce qu'**il présente un carter (5) destiné à assurer la protection des bobines et des moyens de connexion électrique aux bobines.

9. Capteur de mesure selon la revendication 8, **caractérisé en ce que** les parois supérieure et inférieure (5a, 5b) ainsi que la paroi frontale (5c) du carter sont constituées d'un matériau à forte résistivité électrique.

10. Capteur de mesure selon l'une des revendications 1 à 9, **caractérisé en ce que** le capteur est équipé de plaques (6) à forte résistivité magnétique qui doublent les parois inférieure et supérieure.

11. Capteur de mesure selon l'une des revendications 1 à 10, **caractérisé en ce qu'**il est relié à une sonde de mesure de température positionnée à proximité de l'ouverture (4).

12. Capteur de mesure selon l'une des revendications 1 à 10, **caractérisé en ce qu'**il est relié à une sonde de température positionnée dans la paroi de la lingotière.

13. Capteur de mesure selon l'une des revendications 1 à 12, **caractérisé en ce qu'**il comprend un circuit de refroidissement.

14. Procédé de mesure de niveau d'une installation de coulée continue comprenant une lingotière ayant une face supérieure dans laquelle débouche une ouverture (4) dans laquelle est admis le métal liquide **caractérisé en ce que** le procédé comprend les étapes consistant à :
- appliquer une tension à une bobine d'excitation (7) à air pour créer un champ magnétique dont les lignes de champ se propagent selon des lignes de champ supérieures qui s'éloignent de la lingotière et selon des lignes de champ inférieures qui recouvrent la face supérieure de la lingotière et la surface de métal en fusion ;
- mesurer une tension induite générée par l'action des lignes de champ inférieures, ces dernières étant susceptibles d'être modifiées par une variation du niveau de la surface de métal en fusion, dans une bobine de réception inférieure (8) à air parallèle à la bobine d'excitation ;
- mesurer une tension induite générée par l'action des lignes de champ supérieures, ces dernières étant substantiellement dépourvues de perturbations générées par la surface de métal en fusion, dans une bobine de réception supérieure (9) à air parallèle à la bobine d'excitation, et superposée à la bobine de réception inférieure et de géométrie et de caractéristiques identiques à celle-ci ;
- comparer et effectuer un traitement numérique des tensions induites mesurées dans les bobines de réception inférieure et supérieure pour obtenir une valeur du niveau de métal en fusion dans la lingotière ; **caractérisé en ce que**
la bobine d'excitation (7), la bobine de réception inférieure (8) et la bobine de réception supérieure (9) sont orientées dans des plans perpendiculaires à la surface du métal liquide, et
l'ensemble formé par la bobine d'excitation (7), la bobine de réception inférieure (8) et la bobine de réception supérieure (9) est conçu pour être disposé sur la face supérieure de la lingotière sur le bord de l'ouverture,
et **en ce que** le procédé comprend en outre les étapes suivantes:
- mesurer la température de la lingotière ;
- corriger par un traitement numérique la valeur du niveau de métal en fusion en fonction de la température de la lingotière.

15. Procédé selon la revendication 14, **caractérisé en ce qu'**il comprend en outre une étape de correction par un traitement numérique de la valeur du niveau de métal en fusion en fonction de la largeur de la lingotière.

## Patentansprüche

1. Sensor (1) zur Niveaumessung der Oberfläche eines Metalls in flüssiger Phase für eine Stranggussanlage, umfassend eine Kokille mit einer Oberseite (3), in die eine Öffnung (4) mündet, in die das flüssige Metall eingeführt wird, **dadurch gekennzeichnet, dass** der Sensor umfasst:
- eine als Luftspule ausgebildete Erregerspule (7), die mit Strom versorgt wird, um ein Magnetfeld zu erzeugen, dessen Feldlinien sich nach oberen Feldlinien (14), die sich von der Kokille entfernen, und nach unteren Feldlinien (15), die die Oberseite der Kokille und die Oberfläche des geschmolzenen Metalls überspannen, ausbreiten und
- eine als Luftspule ausgebildete untere Aufnahmespule (8) parallel zur Erregerspule, in der eine induzierte Spannung durch die Wirkung der unteren Feldlinien (15) erzeugt wird, wobei diese letztgenannten geeignet sind, durch eine Variation des Niveaus der Oberfläche des geschmolzenen Metalls verändert zu werden, und
- eine als Luftspule ausgebildete obere Aufnahmespule (9) parallel zur Erregerspule (7) und direkt über der unteren Aufnahmespule (8) angeordnet, mit identischer Geometrie und identischen Merkmalen wie diese, in der eine induzierte Spannung durch die Wirkung der oberen Feldlinien (14) erzeugt wird, wobei diese letztgenannten im Wesentlichen frei von Störungen sind, die durch die Oberfläche des geschmolzenen Metalls erzeugt werden, **dadurch gekennzeichnet, dass** die Erregerspule (7), die untere Aufnahmespule (8) und die obere Aufnahmespule (9) in Ebenen senkrecht zu der Oberfläche, deren Niveau gemessen wird, ausgerichtet sind, wobei der Sensor (1) eingerichtet ist, um auf der Oberseite (3) der Kokille am Rand der Öffnung (4) angeordnet zu werden.

2. Sensor zur Niveaumessung nach Anspruch 1, **dadurch gekennzeichnet, dass** die obere Aufnahmespule (9) und die untere Aufnahmespule (8) neben der Erregerspule (7) angeordnet sind.

3. Sensor zur Niveaumessung nach Anspruch 1 oder Anspruch 2, **dadurch gekennzeichnet, dass** die untere Aufnahmespule (8) und die obere Aufnahmespule (9) symmetrisch zur Symmetrieebene der Erregerspule (7) angeordnet sind.

4. Sensor zur Niveaumessung nach einem der Ansprüche 1 bis 3, **dadurch gekennzeichnet, dass** er einen amagnetischen und elektrisch isolierenden Kern (10) umfasst, auf den elektrische Drähte gewickelt sind, die die Erregerspule (7) und die zwei Aufnahmespulen (8, 9) bilden.

5. Messsensor nach Anspruch 4, **dadurch gekennzeichnet, dass** der Kern (10) eine Rille (12), in die ein die Erregerspule (7) bildender elektrischer Draht spiralförmig gewickelt ist, und zwei übereinander angeordnete Rillen (13) mit zueinander parallelen und zu der Achse der die Erregerspule (7) aufnehmenden Rille parallelen Achsen aufweist, in die jeweils ein eine Aufnahmespule (8, 9) bildender elektrischer Draht gewickelt ist.

6. Messsensor nach einem der Ansprüche 4 oder 5, **dadurch gekennzeichnet, dass** der Kern (10) zwei übereinander angeordnete Unterabschnitte (10a, 10b) umfasst, umfassend jeweils eine Rille (13) für eine Aufnahmespule und eine Halbrille (12) für eine Erregerspule.

7. Messsensor nach einem der Ansprüche 5 oder 6, **dadurch gekennzeichnet, dass** jede der Rillen (12 ,13) ein im Wesentlichen rechteckiges Profil aufweist.

8. Messsensor nach einem der Ansprüche 1 bis 7, **dadurch gekennzeichnet, dass** er ein Gehäuse (5) aufweist, das dazu bestimmt ist, den Schutz der Spulen und der elektrischen Anschlussmittel an die Spulen zu gewährleisten.

9. Messsensor nach Anspruch 8, **dadurch gekennzeichnet, dass** die obere und untere Wand (5a, 5b) sowie die vordere Wand (5c) des Gehäuses aus einem Material mit hohem elektrischem Widerstand gebildet sind.

10. Messsensor nach einem der Ansprüche 1 bis 9, **dadurch gekennzeichnet, dass** der Sensor mit Platten (6) mit hohem Magnetwiderstand ausgestattet ist, die die untere und obere Wand aufdoppeln.

11. Messsensor nach einem der Ansprüche 1 bis 10, **dadurch gekennzeichnet, dass** er mit einer Temperaturmesssonde verbunden ist, die in der Nähe der Öffnung (4) positioniert ist.

12. Messsensor nach einem der Ansprüche 1 bis 10, **dadurch gekennzeichnet, dass** er mit einer Temperaturmesssonde verbunden ist, die in der Wand der Kokille positioniert ist.

13. Messsensor nach einem der Ansprüche 1 bis 12, **dadurch gekennzeichnet, dass** er einen Kühlkreislauf umfasst.

14. Verfahren zur Messung des Niveaus einer Stranggussanlage, umfassend eine Kokille mit einer Oberseite, in die eine Öffnung (4) mündet, in die das flüssige Metall zugeführt wird, **dadurch gekennzeichnet, dass** das Verfahren die folgenden Schritte umfasst:
- Anlegen einer Spannung an eine als Luftspule ausgebildete Erregerspule (7), um ein Magnetfeld zu erzeugen, dessen Feldlinien sich gemäß oberen Feldlinien, die sich von der Kokille entfernen, und gemäß unteren Feldlinien, die die Oberseite der Kokille und die Oberfläche des geschmolzenen Metalls überspannen, ausbreiten;
- Messen einer induzierten Spannung, die durch die Wirkung der unteren Feldlinien erzeugt wird, wobei diese letztgenannten geeignet sind, durch eine Variation des Niveaus der Oberfläche des geschmolzenen Metalls in einer unteren als Luftspule ausgebildeten Aufnahmespule (8) parallel zur Erregerspule verändert zu werden;
- Messen einer induzierten Spannung, die durch die Wirkung der oberen Feldlinien erzeugt wird, wobei diese letztgenannten im Wesentlichen frei von Störungen sind, die von der Oberfläche des geschmolzenen Metalls erzeugt werden, in einer als Luftspule ausgebildeten oberen Aufnahmespule (9) parallel zur Erregerspule und direkt über der unteren Aufnahmespule angeordnet, mit identischer Geometrie und identischen Merkmalen wie diese;
- Vergleichen und Durchführen einer digitalen Bearbeitung der in der unteren und oberen Aufnahmespule gemessenen induzierten Spannungen, um einen Wert des Niveaus des geschmolzenen Metalls in der Kokille zu erhalten;
**dadurch gekennzeichnet, dass**
die Erregerspule (7), die untere Aufnahmespule (8) und die obere Aufnahmespule (9) in Ebenen senkrecht auf die Oberfläche des flüssigen Metalls ausgerichtet sind, und
die von der Erregerspule (7), der unteren Aufnahmespule (8) und der oberen Aufnahmespule (9) gebildete Einheit eingerichtet ist, um auf der Oberseite der Kokille am Rand der Öffnung angeordnet zu werden,
und dass das Verfahren ferner die folgenden Schritte umfasst:
- Messung der Temperatur der Kokille;
- Korrektur des Werts des Niveaus des geschmolzenen Metalls in Abhängigkeit von der Temperatur der Kokille durch eine digitale Bearbeitung.

15. Verfahren nach Anspruch 14, **dadurch gekennzeichnet, dass** es ferner einen Korrekturschritt durch digitale Bearbeitung des Werts des Niveaus des geschmolzenen Metalls in Abhängigkeit von der Breite der Kokille umfasst.

## Claims

1. A level measurement sensor (1) for measuring the level of the surface of a liquid phase metal for a continuous casting plant that includes an ingot mold having an upper face (3) into which an opening (4), into which the liquid metal is fed, leads, **characterized in that** the sensor comprises:
- An air excitation coil (7) powered by a current to create a magnetic field whose field lines are propagated along upper field lines (14) which move away from the ingot mold and along lower field lines (15) which cover the upper face of the ingot mold and the molten metal surface,
- a lower air reception coil (8) parallel to the excitation coil in which an induced voltage is generated by the action of the lower filed lines (15), the latter being likely to be modified by a variation of the level of the molten metal surface and,
- an upper air reception coil (9) parallel to the excitation coil (7), and directly superposed on the lower reception coil (8), and with geometry and characteristics identical thereto in which an induced voltage is generated by the action of the upper field lines (14), the latter being substantially free of disturbances generated by the molten metal surface,
**characterized in that** the excitation coil (7), the lower reception coil (8) and the upper reception coil (9) are oriented in planes perpendicular to the surface whose level is measured;
the sensor (1) is designed to be positioned on the upper surface (3) of the ingot mold in proximity to the opening (4).

2. The level measurement sensor as claimed in claim 1, **characterized in that** the upper reception coil (9) and the lower reception coil (8) are juxtaposed with the excitation coil (7).

3. The level measurement sensor as claimed in claim 1 or claim 2, **characterized in that** the lower reception coil (8) and the upper reception coil (9) are positioned symmetrically relative to the plane of symmetry of the excitation coil (7).

4. The level measurement sensor as claimed in one of claims 1 to 3, **characterized in that** it comprises an amagnetic and electrically insulating core (10) on which are wound electric wires forming the excitation coil (7) and the two reception coils (8,9).

5. The measurement sensor as claimed in claim 4, **characterized in that** the core (10) has a groove (12) in which is helically wound an electric wire forming the excitation coil (7) and two superposed grooves (13) having axes parallel to one another and parallel to the axis of the groove receiving the excitation coil (7) in each of which is helically wound an electric wire forming a reception coil (8, 9).

6. The measurement sensor as claimed in one of claims 4 or 5, **characterized in that** the core (10) comprises two superposed sub-parts (10a, 10b) each comprising a groove (13) for a reception coil and a half-groove (12) for an excitation coil.

7. The measurement sensor as claimed in one of claims 5 or 6, **characterized in that** each of the grooves (12, 13) has a substantially rectangular profile.

8. The measurement sensor as claimed in one of claims 1 to 7, **characterized in that** it has a housing (5) intended to protect the coils and the means for electrical connection to the coils.

9. The measurement sensor as claimed in claim 8, **characterized in that** the upper and lower walls (5a, 5b) and the front wall (5c) of the housing are made of a material with high electrical resistivity.

10. The measurement sensor as claimed in one of claims 1 to 9, **characterized in that** the sensor is equipped with plates (6) with high magnetic resistivity which line the lower and upper walls.

11. The measurement sensor as claimed in one of claims 1 to 10, **characterized in that** it is linked to a temperature measurement probe positioned in proximity to the opening (4).

12. The measurement sensor as claimed in one of claims 1 to 10, **characterized in that** it is linked to a temperature probe positioned in the wall of the ingot mold.

13. The measurement sensor as claimed in one of claims 1 to 12, **characterized in that** it comprises a cooling circuit.

14. A method for measuring the level in a continuous casting plant comprising an ingot mold having an upper face into which an opening (4), into which the liquid metal is fed, leads, **characterized in that** the method comprises steps consisting in :
- applying a voltage to an air excitation coil (7) to create a magnetic field whose field lines are propagated along upper field lines which move away from the ingot mold and along lower field lines which cover the upper face of the ingot mold and the molten metal surface ;
- measuring an induced voltage generated by the action of the lower field lines, the latter being likely to be modified by a variation of the level of the molten metal surface, in a lower air reception coil (8) parallel to the excitation coil;
- measuring an induce voltage generated by the action of the upper field lines, the latter being substantially free of disturbances generated by the molten metal surface, in an upper air reception coil (9) parallel to the excitation coil, and superposed on the lower reception coil and with a geometry and characteristics identical thereto ;
- comparing and digitally processing the induced voltages measured in the lower and upper reception coils to obtain a value of the molten metal level in the ingot mold;
**characterized in that** the excitation coil (7), the lower reception coil (8) and the upper reception coil (9) are oriented in planes perpendicular to the surface of the liquid metal, and
the assembly formed by the excitation coil (7), the lower reception coil (8) and the upper reception coil (9) is designed to be positioned on the upper face of the ingot mold in proximity to the opening,
and **in that** the method further comprises the following steps :
- measuring the temperature of the ingot mold;
- correcting by a digital processing the value of the molten metal level according to the temperature of the ingot mold.

15. The method as claimed in claim 14, **characterized in that** it also comprises a step for correcting by digital processing the value of the molten metal level according to the width of the ingot mold.
